# EUROPEAN PATENT SPECIFICATION

(11) **EP 1 983 595 B1**
(45) Date of publication and mention of the grant of the patent: **28.11.2012**
(21) Application number: 08290325.3
(22) Date of filing: 03.04.2008
(51) Int. Cl.: H01M 2/26, H01M 4/70

(54) **Connection system for an electrochemical cell**
Verbindungssystem für eine elektrochemische Zelle
Système de connexion pour cellule électrochimique

(30) Priority: 11.04.2007 US 734021
(43) Date of publication of application: 22.10.2008
(73) Proprietor: SAFT, 93170 Bagnolet (FR)
(72) Inventor: Adams R. Grant, Enola, Pennsylvania 17025 (US)
(74) Representative: Hirsch & Associés

(56) References cited:
- EP-A- 0 955 682
- EP-A- 1 076 371
- DE-A1- 10 031 453
- JP-A- 60 007 058
- US-A1- 2004 023 107

## Description

### BACKGROUND OF THE INVENTION

Electrochemical cells are commonly known as batteries. A particular kind of electrochemical cell includes an alternating sequence of spirally wound positive and negative electrodes constituting the electrochemical bundle. This arrangement is commonly known as a "jelly roll."

FIG. 1 shows a cross-section of one end of a jelly roll electrochemical cell disclosed in U.S. Patent No. 5,849,431. In FIG. 1, a spirally wound electrode assembly 35 is made by wrapping a positive electrode, a negative electrode, and a separator around a core 31. Extending from the winding foil of the positive electrode are rectangular leads 11, also referred to as "tabs." The leads 11 are attached to a terminal 20, typically by welding. A similar terminal exists on the other end of the electrode assembly to form the negative terminal.

The tabs are typically welded to the electrodes. During this welding, weld spatter may fall into the windings of the jelly roll, which can cause electrical shorts. Prior art tabs are typically thin, metal foils. During vibration, one or more of the tabs may break, partially severing the electrical path from the electrode assembly and the terminal. The additional step of attaching the tabs to the electrode assembly also increases assembly time of the electrochemical cell.

U.S. Publication No. 2005/0008933 discloses a tabless jelly roll type of electrochemical cell. Instead of using tabs to connect the electrodes to the respective terminals, a tabless jelly roll attaches a current collecting plate directly to the electrodes. To provide a surface for welding, part of the metallic winding foils of each electrode extend past the active portion of the electrochemical bundle. The ends of the winding foils are folded into a plane by pressing down on the winding foils for partially crush them. The current collecting plate is then welded directly to the flattened portion of the winding foils.

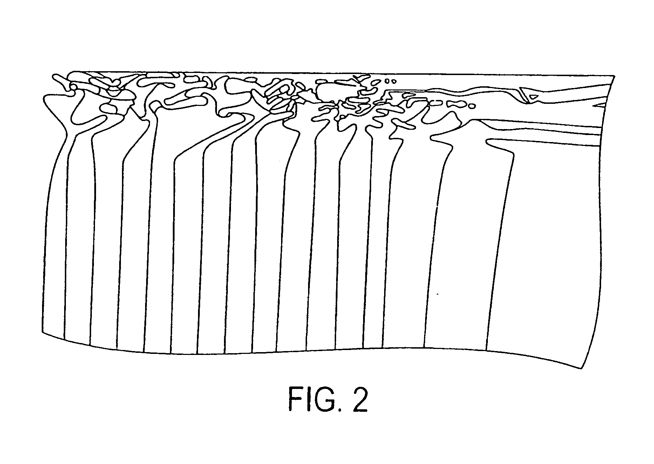

Pressing downward in an axial direction on the winding foils can cause them to bend in varying directions as the winding foils buckle under the pressure. Such a result is shown in FIG. 2. Because of the random folding of the winding foils, gaps may exist between neighboring winding foils. When the current collecting plate is welded, areas over such gaps become over-heated, potentially resulting in the welder burning a hole through the current collecting plate. This can result in irreparable damage to the electrochemical bundle, wasting the significant expense that has already occurred by that point in the manufacture of the battery.

### SUMMARY OF THE INVENTION

In one aspect, the present invention relates to an electrochemical cell including a can and a tabless jelly roll disposed in the can. The tabless jelly roll includes a positive electrode and a negative electrode, wherein positive winding foils protrude from a positive end of the tabless jelly roll and negative winding foils protrude from a negative end of the tabless jelly roll. The positive winding foils are folded in a same direction to overlap each other in a first pattern of recesses and the negative winding foils are folded in a same direction to overlap each other in a second pattern of recesses. A positive disk includes a plurality of leg forms welded into the first pattern of recesses formed in the positive winding foils. A negative disk includes a plurality of leg forms welded into the second pattern of recesses formed in the winding foils. At least one of the positive disk and the negative disk is electrically insulated from the can.

In another aspect, the present invention relates to a method of manufacturing an electrochemical cell that includes a tabless jelly roll. The method includes applying a radial force across positive winding foils on a positive end of the tabless jelly roll such that the positive winding foils are folded in a radial direction to overlap each other in a first pattern of recesses. A radial force is applied across negative winding foils on a negative end of the tabless jelly roll such that the negative winding foils are folded in a radial direction to overlap each other in a second pattern of recesses. A positive disk and a negative disk are provided, wherein the positive disk includes a plurality of leg forms corresponding to the first pattern of recesses formed in the positive winding foils and the negative disk includes a plurality of leg forms corresponding to the second pattern of recesses formed in the negative winding foils. The plurality of leg forms of the positive disk and the negative disk are welded to the first pattern of recesses formed in the positive winding foils and the second pattern of recesses formed in the negative winding foils, respectively. The tabless jelly roll is disposed into a can. At least one of the positive disk and the negative disk is electrically insulated from the can.

Other exemplary embodiments and advantages of the invention will be apparent from the following description and the appended claims.

### BRIEF DESCRIPTION OF THE DRAWINGS

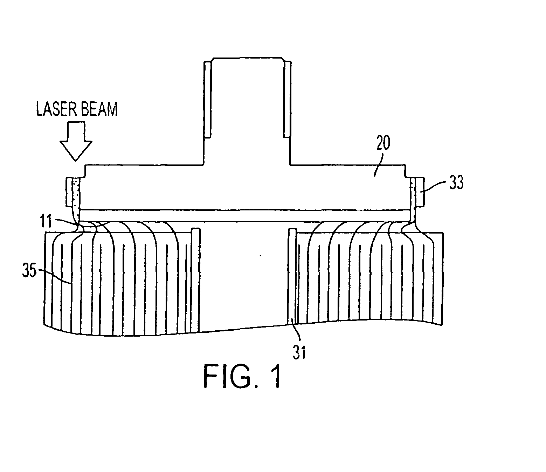

FIG. 1 is a cross-section of a prior art electrochemical cell.
FIG. 2 is a cross-section of winding foils that have been axially pressed.
FIG. 3 is a cross-section of an electrochemical cell in accordance with an embodiment of the present invention.
FIG. 4 is an exploded view of a positive terminal of an electrochemical cell assembly in accordance with an embodiment of the present invention.
FIG. 5 is a cross-section of the positive terminal of the electrochemical cell assembly shown in FIG. 4.
FIG. 6 is a cross-section of a negative terminal of an electrochemical assembly in accordance with an embodiment of the present invention.
FIGS. 7A-7C show a forming tool in accordance with an embodiment of the present invention.

### DETAILED DESCRIPTION OF EXEMPLARY EMBODIMENTS OF THE INVENTION

Embodiments of the present invention relate generally to electrochemical cells having a tabless jelly roll for an electrode assembly.

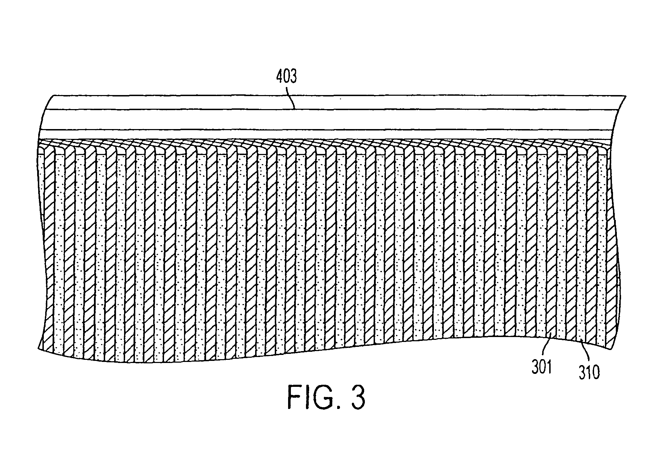

In FIG. 3, a partial cross-section of an electrochemical cell in accordance with an embodiment of the present invention is shown. The electrode assembly 310 is similar to the prior art tabless jelly roll described above. Winding foils 301 protrude from the electrode assembly 310. For the positive end of the electrode assembly, the winding foils extend from the positive electrode, and, conversely, extend from the negative electrode for the negative end of the electrode assembly. The protruding portions of the winding foils 301 are folded over in the same direction, radially outward, so as to overlap according to a predetermined pattern, as shown in FIG. 3. A radial force (i.e. transverse to the axis of the jelly roll) may be applied to the winding foils 301 to fold them over radially inward or outward.

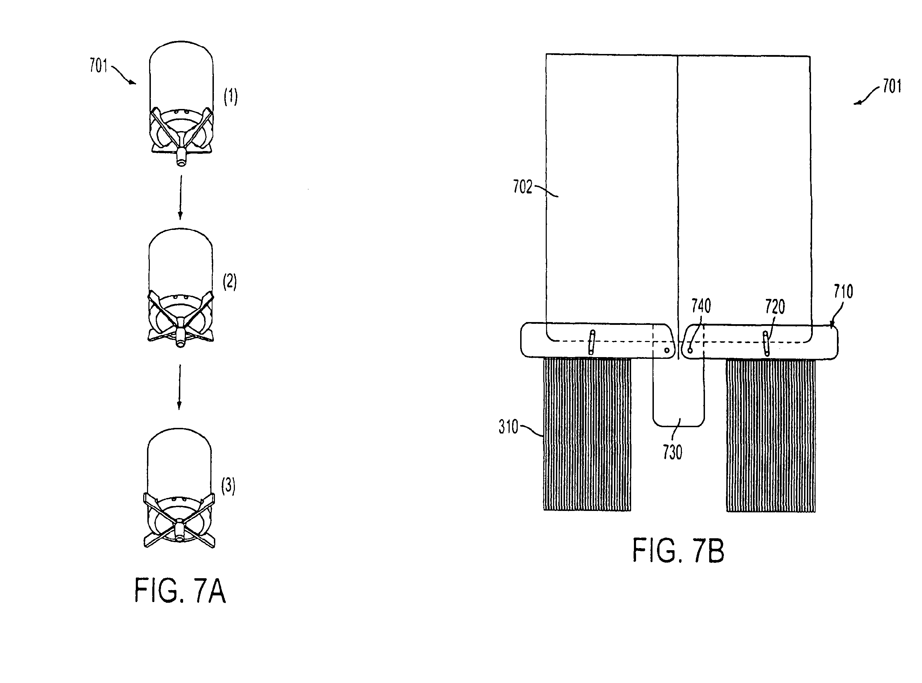

In FIGS. 7A-7C, a forming tool 701 for forming a predetermined pattern of recesses in a jelly roll 310 in accordance with an embodiment of the present invention is shown. The forming tool 701 includes a cylindrical body 702 with a center spindle 730, to which four forming leaves 710 are attached by pins 740 at one end. Towards the middle of the forming leaves 710, the forming leaves are pinned to the body 702 with a slot 720, which allows for the forming leaves 710 to pivot at an angle relative to the spindle 730. The spindle 730 is able to movably extend from the body 702 along an axis. The spindle 730 may be spring-loaded such that the default position of the spindle 730 is extended, which causes the forming leaves 710 to fold at an angle.

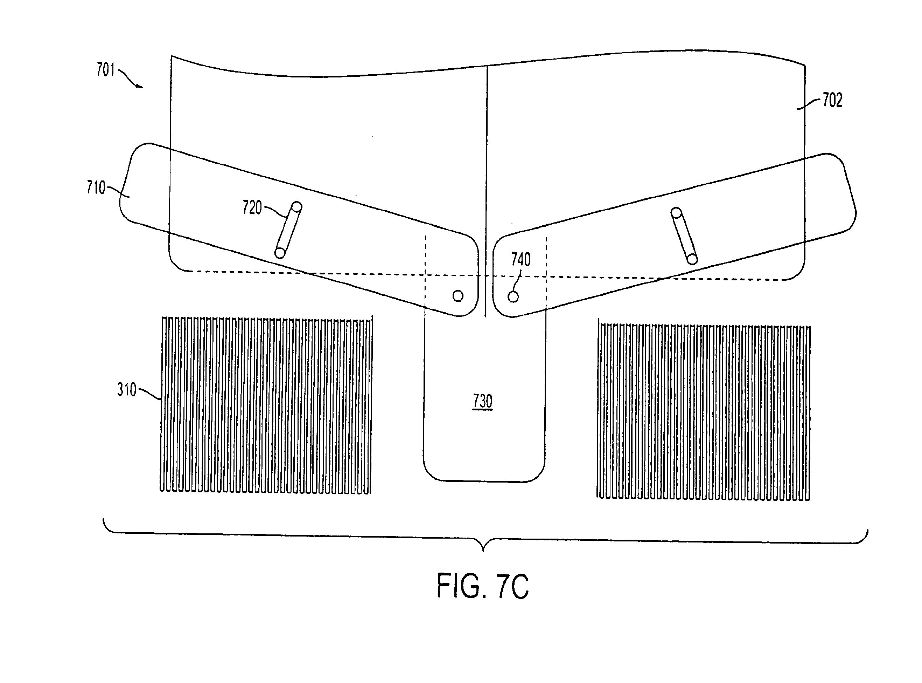

FIG. 7A shows the progression of the extension of the spindle 730 relative to the angle of the forming leaves 710. As the forming leaves 710 contact the winding foils of the jelly roll 310, the spindle 730 is pushed inward and the forming leaves 710 fold until they are about perpendicular with the axis of the body 702. FIG. 7C shows a more detailed view of the forming tool 701 before the forming leaves 710 contact the jelly roll 310. FIG. 7B shows the forming leaves 710 after being fully pressed into the jelly roll 310 such that they are substantially perpendicular to the axis of the body 702. As the forming leaves 710 pivot, the winding foils of the jelly roll 310 are folded radially outward beginning from the inner most to the outer most winding foils. As a result, each winding foil folds over on top of the next in an orderly fashion. The pattern, shape, depth, and width of the recesses formed in the jelly roll 310 are determined by the pattern of forming leaves 710. In this particular embodiment, there are four forming leaves 710, and thus, four recesses are formed at about the same time in the jelly roll. Those having ordinary skill in the art will appreciate that there may be more or less forming leaves without departing from the scope of the present invention. Further, the forming tool may be applied more than once to the same end of the jelly roll. For example, after forming the first four recesses at about 90 degrees apart, the forming tool and jelly roll could be rotated 45 degrees relative to each other. Then the forming tool could be pressed again into the jelly roll to form a total of 8 recesses spaced about 45 degrees apart.

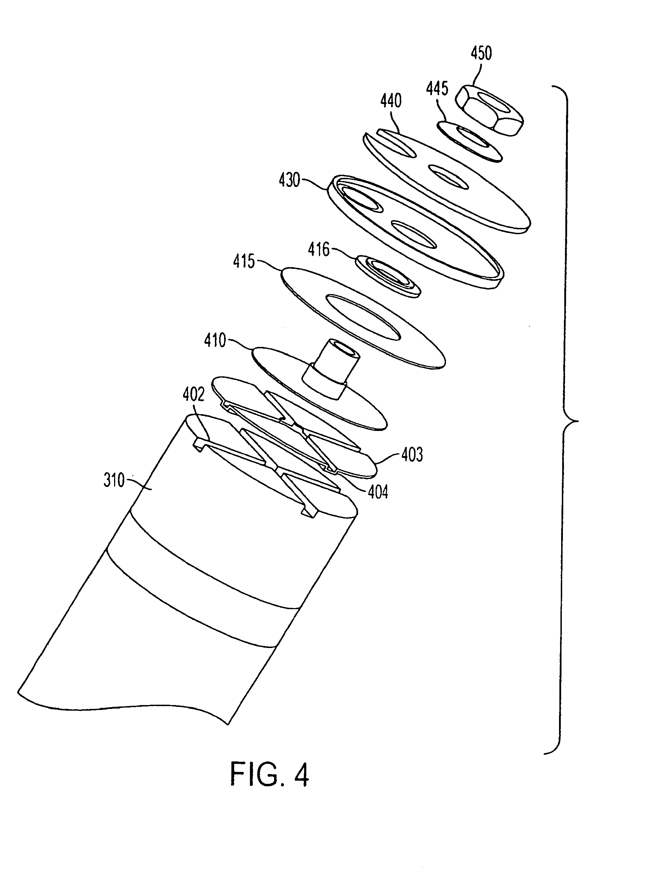

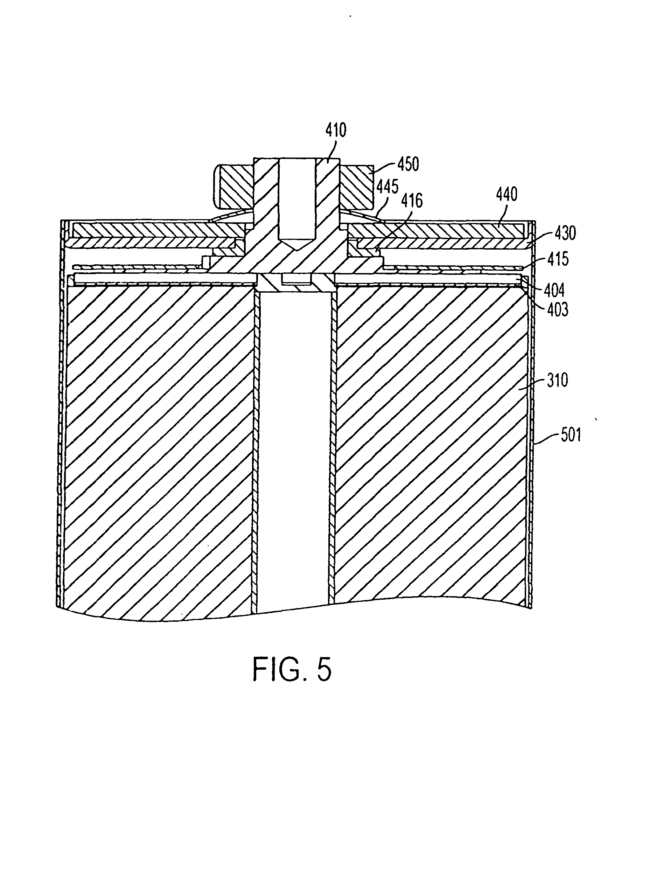

Turning to FIGS. 4 and 5, the electrochemical cell assembly in accordance with an embodiment of the present invention is shown. In FIGS. 4 and 5, the electrode assembly 310 is shown as a solid cylinder for simplicity, and is hereinafter referred to as the "jelly roll." The folding of the winding foils is performed in a pattern to form a plurality of recesses 402 in the end of the jelly roll 310, which is the positive end in FIGS. 4 and 5. In this particular embodiment, there are four recesses 402; however, those having ordinary skill in the art will appreciate that there may be as few as two recesses 402 and that the upper limit of the quantity of recesses 402 will vary depending on the electrical current requirements and the size of the jelly roll 310. In one embodiment, each recess 402 is about 1/8 inch (3.2 mm) deep; however the invention is not limited in this regard.

After the winding foils 301 are folded over into a pattern of recesses, a disk 403 is provided as a current collector. The disk 403 includes a plurality of legs 404 that correspond to the pattern of recesses 402 in the jelly roll 310. The plurality of legs 404 may have a width and depth about the same as the recesses 402 in order for the disk 403 to fit closely with the end of the jelly roll 310. The bottoms of the plurality of legs 404 are placed in contact with the recesses 402. A welding operation may then be performed along each leg 404 to attach the disk 403 to the jelly roll 310 via the recesses 402. Because the winding foils in the recesses 402 are folded over onto each other, solid, planar surfaces are provided for the welding operation, which allows for a continuous weld to be formed across the jelly roll 310. In one embodiment, laser welding is used for the welding operation.

FIG. 5 shows the assembled positive end of the electrochemical assembly shown in FIG. 4. Before or after the disk 403 is welded to the jelly roll 310, a terminal 410 is attached to the disk 403. In one embodiment, the terminal 410 is welded onto the disk 403 before welding to the jelly roll 310. In another embodiment, the disk 403 and the terminal may be a single piece. The terminal 410 may include a threaded portion to allow a hex nut 450 to be threadably attached to the terminal 410. A seal 416 may be disposed around the terminal 410 to seal the inside of the electrochemical assembly and the atmosphere.

The jelly roll 310 is disposed in a can 501. After attachment of the disk 403 and terminal 410, a cover 430 is placed over the end of the can 501 with the seal 416 between the terminal 410 and the cover 430. On the outside of the cover 430, an insulating washer 440 may be provided to electrically insulate the positive electrode of the jelly roll from the can 501 and the cover 430. To complete the assembly of the positive end of the electrochemical cell, a Bellville or other spring washer 445 may be provided between the hex nut 450 and the insulating washer 440. In one embodiment, the negative end of the electrochemical cell is assembled in a similar manner to the positive end, such that the negative electrode is also electrically insulated. In such an embodiment, the can 501 is neutral and may be in the form of a simple cylinder, rather than having a bottom provided for the negative end. The positive terminal may be made of aluminum. The negative terminal may be, for example, nickel plated copper.

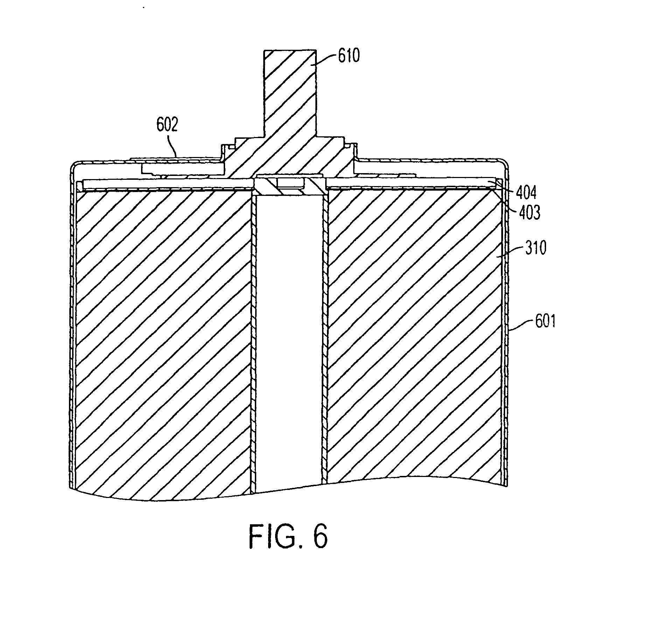

In FIG. 6, a negative end of an electrochemical cell in accordance with an embodiment of the present invention is shown. The disk 403 may be attached to the jelly roll 310 and the terminal 610 in the same manner as that of the positive end of the electrochemical cell. In this embodiment, the can 601 is deep-drawn to have a bottom portion 602. The negative terminal 610 is in contact with the bottom portion of the can 602, thereby causing the can 601 to be negatively charged.

Electrochemical cells in accordance with embodiments of the present invention may have one or more of the following advantages.

The folded over layer of winding foils in the recesses of the jelly roll provide a penetration barrier during the welding of the disk to the jelly roll. The air gaps associated with axial pressure on the winding foils (see FIG. 2) are avoided by folding the winding foils to overlap each other.

A disk with leg forms corresponding to the pattern of recesses in the jelly roll enhances the rigidity of the jelly roll. As a result, the electrochemical cell is made more resistant to shock and vibration. Additionally, assembly is simplified by avoiding the need to weld tabs to the jelly roll.

The welding of the leg forms to the pattern of recesses in the jelly roll provides an even distribution for thermal and electrical transfers between the jelly roll and the disk. Depending on the size of the electrochemical cell and the electrical transfer requirements, more leg forms may be provided in the disk to correspond to a greater number of recesses in the jelly roll.

While the invention has been described with respect to a limited number of embodiments, those skilled in the art, having benefit of this disclosure, will appreciate that other embodiments can be devised which do not depart from the scope of the invention as disclosed herein. Accordingly, the scope of the invention should be limited only by the attached claims.

## Claims

1. An electrochemical cell, comprising:
a can;
a tabless jelly roll disposed in the can and comprising a positive electrode and a negative electrode, wherein positive winding foils protrude from a positive end of the tabless jelly roll and negative winding foils protrude from a negative end of the tabless jelly roll, and wherein the positive winding foils are folded in a same direction to overlap each other in a first pattern of recesses and the negative winding foils are folded in a same direction to overlap each other in a second pattern of recesses;
a positive disk comprising a plurality of leg forms corresponding to the first pattern of recesses formed in the positive winding foils, wherein the plurality of leg forms is welded into the first pattern of recesses;
a negative disk comprising a plurality of leg forms corresponding to the second pattern of recesses formed in the negative winding foils, wherein the plurality of leg forms is welded into the second pattern of recesses;
wherein at least one of the positive disk and the negative disk is electrically insulated from the can.

2. The electrochemical cell of claim 1, further comprising:
a positive terminal attached to the positive disk and electrically insulated from the can;
and a negative terminal attached to the negative disk.

3. The electrochemical cell of claim 2, wherein the negative terminal is electrically insulated from the can.

4. The electrochemical cell of claim 2, wherein both the positive terminal and the negative terminal are electrically insulated from the can.

5. The electrochemical cell of claim 1, wherein the positive winding foils and the negative winding foils are folded in a radially outward direction.

6. The electrochemical cell of claim 1 or claim 4, wherein the can is a cylinder.

7. A method of manufacturing an electrochemical cell comprising a tabless jelly roll, the method comprising:
applying a radial force across positive winding foils on a positive end of the tabless jelly roll such that the positive winding foils are folded in a radial direction to overlap each other in a first pattern of recesses;
applying a radial force across negative winding foils on a negative end of the tabless jelly roll such that the negative winding foils are folded in a radial direction to overlap each other in a second pattern of recesses;
providing a positive disk and a negative disk, wherein the positive disk comprises a plurality of leg forms corresponding to the first pattern of recesses formed in the positive winding foils and the negative disk comprises a plurality of leg forms corresponding to the second pattern of recesses formed in the positive winding foils;
welding the plurality of leg forms of the positive disk to the first pattern of recesses formed in the positive winding foils;
welding the plurality of leg forms of the negative disk to the second pattern of recesses formed in the negative winding foils;
disposing the tabless jelly roll into a can;
electrically insulating at least one of the positive disk and the negative disk from the can.

8. The method of claim 7, wherein the applied radial force is in an outward direction relative to an axis of the tabless jelly roll.

9. The method of claim 8, further comprising:
welding a terminal stud to each of the positive disk and the negative disk.

10. The method of claim 8, wherein both the positive disk and the negative disk are electrically insulated from the can.

11. The method of claim 8, wherein the applying of radial force is performed using forming leaves pivotally attached to a forming tool body.

12. The method of claim 11, wherein the forming tool body is cylindrical and has at least four forming leaves spaced at about equal angles apart.

13. The method of claim 11, wherein the forming tool comprises:
a body;
a spindle configured to move along an axis within the body;
a plurality of forming leaves pivotally attached to the spindle and configured to push the spindle axially inward in response to a pressing force and change in angle relative to the axis.

14. The method of claim 13, wherein the spindle is spring loaded to rest in an extended position with the plurality of forming leaves at an upward angle.

15. The method of claim 13, wherein each of the plurality of leaves is pinned within a slot to the body.

## Patentansprüche

1. Elektrochemische Zelle, Folgendes umfassend:
eine Dose;
eine Jelly-Rolle ohne Tab, welche in der Dose angeordnet ist und eine positive Elektrode und eine negative Elektrode umfasst, wobei positive gewickelte Folien an einem positiven Ende der Jelly-Rolle ohne Tab vorstehen und negative gewickelte Folien an einem negativen Ende der Jelly-Rolle ohne Tab vorstehen und wobei die positiven gewickelten Folien in eine gleiche Richtung gefaltet sind, um jede andere in einem ersten Muster von Aussparungen zu überlappen, und die negativen gewickelten Folien in eine gleiche Richtung gefaltet sind, um jede andere in einem zweiten Muster von Aussparungen zu überlappen;
eine positive Scheibe, welche mehrere Schenkelformen umfasst, welche dem ersten Muster von Aussparungen entsprechen, welche in den positiven gewickelten Folien ausgebildet sind, wobei die mehreren Schenkelformen in das erste Muster der Aussparungen geschweißt sind;
eine negative Scheibe, welche mehrere Schenkelformen umfasst, welche dem zweiten Muster von Aussparungen entsprechen, welche in den negativen gewickelten Folien ausgebildet sind, wobei die mehreren Schenkelformen in das zweite Muster der Aussparungen geschweißt sind;
wobei mindestens eine der positiven Scheibe und der negativen Scheibe von der Dose elektrisch isoliert ist.

2. Elektrochemische Zelle nach Anspruch 1, weiterhin Folgendes umfassend:
einen positiven Anschluss, welcher an der positiven Scheibe befestigt ist und von der Dose elektrisch isoliert ist;
und einen negativen Anschluss, welcher an der negativen Scheibe befestigt ist.

3. Elektrochemische Zelle nach Anspruch 2, wobei der negative Anschluss elektrisch von der Dose isoliert ist.

4. Elektrochemische Zelle nach Anspruch 2, wobei sowohl der positive Anschluss als auch der negative Anschluss von der Dose elektrisch isoliert sind.

5. Elektrochemische Zelle nach Anspruch 1, wobei die positiven gewickelten Folien und die negativen gewickelten Folien in eine radial nach außen zeigende Richtung gefaltet sind.

6. Elektrochemische Zelle nach Anspruch 1 oder 4, wobei die Dose ein Zylinder ist.

7. Verfahren zum Herstellen einer elektrochemischen Zelle, welche eine Jelly-Rolle ohne Tab umfasst, das Verfahren umfassend:
Anwenden einer radialen Kraft über positive gewickelte Folien auf einem positiven Ende der Jelly-Rolle ohne Tab, so dass die positiven gewickelten Folien in einer radialen Richtung gefaltet werden, um jede andere in einem ersten Muster von Aussparungen zu überlappen;
Anwenden einer radialen Kraft über negative gewickelte Folien auf einem negativen Ende der Jelly-Rolle ohne Tab, so dass die negativen gewickelten Folien in einer radialen Richtung gefaltet werden, um jede andere in einem zweiten Muster von Aussparungen zu überlappen;
Bereitstellen einer positiven Scheibe und einer negativen Scheibe, wobei die positive Scheibe mehrere Schenkelformen umfasst, welche dem ersten Muster von Aussparungen entsprechen, welche in den positiven gewickelten Folien ausgebildet sind, und die negative Scheibe mehrere Schenkelformen umfasst, welche dem zweiten Muster von Aussparungen entsprechen, welche in den positiven gewickelten Folien ausgebildet sind;
Schweißen der mehreren Schenkelformen der positiven Scheibe auf das erste Muster der Aussparungen, welche in den positiven gewickelten Folien ausgebildet sind;
Schweißen der mehreren Schenkelformen der negativen Scheibe auf das zweite Muster der Aussparungen, welche in den negativen gewickelten Folien ausgebildet sind;
Anordnen der Jelly-Rolle ohne Tab in einer Dose;
elektrisches Isolieren mindestens einer der positiven Scheibe und der negativen Scheibe von der Dose.

8. Verfahren nach Anspruch 7, wobei die angewandte radiale Kraft in eine nach außen zeigende Richtung in Bezug auf eine Achse der Jelly-Rolle ohne Tab geht.

9. Verfahren nach Anspruch 8, weiterhin Folgendes umfassend:
Schweißen jeweils einer Anschlussklemme an die positive Scheibe und an die negative Scheibe.

10. Verfahren nach Anspruch 8, wobei sowohl die positive Scheibe als auch die negative Scheibe von der Dose elektrisch isoliert sind.

11. Verfahren nach Anspruch 8, wobei das Anwenden der radialen Kraft unter Verwendung von Formblättern durchgeführt wird, welche drehgelenkig an einem Formwerkzeugkörper befestigt sind.

12. Verfahren nach Anspruch 11, wobei der Formwerkzeugkörper zylindrisch ist und mindestens vier Formblätter aufweist, welche in ungefähr gleichen Winkeln voneinander beabstandet sind.

13. Verfahren nach Anspruch 11, wobei das Formwerkzeug Folgendes umfasst:
einen Körper;
eine Spindel, welche konfiguriert ist, sich entlang einer Achse innerhalb des Körpers zu bewegen;
mehrere Formblätter, welche drehgelenkig an der Spindel befestigt sind und konfiguriert sind, die Spindel axial nach innen zu drücken als Reaktion auf eine Druckkraft und Winkelveränderung relativ zu der Achse.

14. Verfahren nach Anspruch 13, wobei die Spindel federbelastet ist, um in einer ausgedehnten Position mit den mehreren Formblättern in einem aufwärts gerichteten Winkel zu ruhen.

15. Verfahren nach Anspruch 13, wobei jedes der mehreren Blätter innerhalb eines Schlitzes an dem Körper verstiftet ist.

## Revendications

1. Générateur électrochimique, comprenant:
un boîtier ;
un enroulement d'électrodes sans languettes du type «jelly roll» disposé dans le boîtier et comprenant une électrode positive et une électrode négative, dans lequel des feuilles de l'enroulement positif font saillie à partir d'une extrémité positive de l'enroulement d'électrodes sans languettes du type «jelly roll» et des feuilles de l'enroulement négatif font saillie à partir d'une extrémité négative de l'enroulement d'électrodes sans languettes du type «jelly roll», et dans lequel les feuilles de l'enroulement positif sont pliées dans une même direction pour se chevaucher les unes les autres selon un premier motif d'évidements et les feuilles de l'enroulement négatif sont pliées dans une même direction pour se chevaucher les unes les autres selon un deuxième motif d'évidements ;
un disque positif comprenant une pluralité de motifs en saillie correspondant au premier motif d'évidements formés dans les feuilles de l'enroulement positif, dans lequel la pluralité de motifs en saillie est soudée dans le premier motif d'évidements ;
un disque négatif comprenant une pluralité de motifs en saillie correspondant au deuxième motif d'évidements formé dans les feuilles de l'enroulement négatif, dans lequel la pluralité de motifs en saillie est soudée dans le deuxième motif d'évidements ;
dans lequel au moins un parmi le disque positif et le disque négatif est isolé électriquement du boîtier.

2. Générateur électrochimique selon la revendication 1, comprenant en outre :
une borne positive fixée au disque positif et isolée électriquement du boîtier ;
et une borne négative fixée au disque négatif.

3. Générateur électrochimique selon la revendication 2, dans lequel la borne négative est isolée électriquement du boîtier.

4. Générateur électrochimique selon la revendication 2, dans lequel à la fois la borne positive et la borne négative sont isolées électriquement du boîtier.

5. Générateur électrochimique selon la revendication 1, dans lequel les feuilles de l'enroulement positif et de l'enroulement négatif sont pliées dans une direction radialement vers l'extérieur.

6. Générateur électrochimique selon la revendication 1 ou la revendication 4, dans lequel le boîtier est un cylindre.

7. Procédé de fabrication d'un générateur électrochimique comprenant un enroulement d'électrodes sans languettes du type «jelly roll», le procédé comprenant :
l'application d'une force radiale à travers les feuilles de l'enroulement positif au niveau d'une extrémité positive de l'enroulement d'électrodes sans languettes du type «jelly roll» de telle sorte que les feuilles de l'enroulement positif soient pliées dans une direction radiale pour se chevaucher les unes les autres selon un premier motif d'évidements ;
l'application d'une force radiale à travers les feuilles de l'enroulement négatif au niveau d'une extrémité négative de l'enroulement d'électrodes sans languettes du type «jelly roll» de telle sorte que les feuilles de l'enroulement négatif soient pliées dans une direction radiale pour se chevaucher les unes les autres selon un deuxième motif d'évidements ;
la fourniture d'un disque positif et d'un disque négatif, dans lequel le disque positif comprend une pluralité de motifs en saillie correspondant au premier motif d'évidements formés dans les feuilles de l'enroulement positifs et le disque négatif comprend une pluralité de motifs en saillie correspondant au deuxième motif d'évidements formés dans les feuilles de l'enroulement positif ;
le soudage de la pluralité des motifs en saillie du disque positif au premier motif d'évidements formés dans les feuilles de l'enroulement positif ;
le soudage de la pluralité des motifs en saillie du disque négatif au deuxième motif d'évidements formés dans les feuilles de l'enroulement négatif ;
la disposition de l'enroulement d'électrodes sans languettes du type «jelly roll» dans un boîtier ;
l'isolation électrique d'au moins un parmi le disque positif et le disque négatif par rapport au boîtier.

8. Procédé selon la revendication 7, dans lequel la force radiale appliquée est dirigée vers l'extérieur par rapport à un axe de l'enroulement d'électrodes sans languettes du type «jelly roll».

9. Procédé selon la revendication 8, comprenant en outre :
le soudage d'une borne de connexion à chacun parmi le disque positif et le disque négatif.

10. Procédé selon la revendication 8, dans lequel à la fois le disque positif et le disque négatif sont isolés électriquement par rapport au boîtier.

11. Procédé selon la revendication 8, dans lequel l'application de la force radiale est effectuée en utilisant des lames de formage fixées à pivotement sur un corps d'outil de formage.

12. Procédé selon la revendication 11, dans lequel le corps de l'outil de formage est de forme cylindrique et présente au moins quatre lames de formage espacées d'environ le même angle l'une par rapport à l'autre.

13. Procédé selon la revendication 11, dans lequel l'outil de formage comprend:
un corps;
une broche configurée pour se déplacer le long d'un axe à l'intérieur du corps ;
une pluralité de lames de formage fixées de manière pivotante à la broche et configurées pour solliciter la broche axialement vers l'intérieur en réponse à une force de pression et un changement de l'angle par rapport à l'axe.

14. Procédé selon la revendication 13, dans lequel la broche est sollicitée élastiquement pour rester au repos dans une position étendue avec la pluralité de lames de formage disposées selon un angle vers le haut.

15. Procédé selon la revendication 13, dans lequel chacune de la pluralité de lames est fixée à l'intérieur d'une fente au corps.
